# EUROPÄISCHE PATENTSCHRIFT

(11) **EP 0 936 378 B1**
(45) Veröffentlichungstag und Bekanntmachung des Hinweises auf die Patenterteilung: **04.05.2005**
(21) Anmeldenummer: 99102474.6
(22) Anmeldetag: 09.02.1999
(51) Int. Cl.: F16G 13/20

(54) **Kette für einen Schubkettenantrieb und deren Verwendung**
Chain for a thrust chain drive and use thereof
Chaîne pour un entraînement par chaîne de poussée et leur utilisation

(30) Priorität: 10.02.1998 DE 19805157
(43) Veröffentlichungstag der Anmeldung: 18.08.1999
(73) Patentinhaber: Schlachter, Klemens, D-89340 Leipheim (DE)
(72) Erfinder: Schlachter, Klemens, D-89340 Leipheim (DE)
(74) Vertreter: Pfenning, Meinig & Partner GbR

(56) Entgegenhaltungen:
- EP-A- 0 624 703
- FR-A- 2 345 626
- US-A- 2 219 125
- US-A- 3 841 169
- US-A- 4 521 993

## Beschreibung

Die Erfindung betrifft eine Kette fur einen Schubkettenantrieb sowie dessen Verwendung.

Solche Ketten werden für die verschiedensten Antriebsformen und dabei auch in Kettengetrieben eingesetzt.

Hierfür sind verschiedene Rollenketten bekannt, die in Verbindung mit entsprechend ausgebildeten Kettenrädern, die wiederum für den An- und Abtrieb benutzt werden können, eingesetzt werden.

Probleme gibt es jedoch, wenn Ketten direkt als Schubantriebselemente verwendet werden sollen und dabei insbesondere Schub- bzw. Druckkräfte axial und dabei zumindest teilweise ohne eine entsprechende Längsführung übertragen oder ausgeübt werden sollen, da es im ungeführten Bereich der Kette zum Abknicken kommen kann. Bei relativ geringen zu übertragenden Schubkräften, kann dieses Problem bei Rückgriff auf bekannte Prinzipien solcher Ketten beherrscht werden. Werden die erforderlichen Kräfte jedoch größer, z.B. in Bereichen oberhalb 500 N und ungefährer Länge > 100 mm, stoßen die herkömmlichen Ketten, die verwendet werden sollen, an ihre Grenzen und ein sicherer Langzeitbetrieb ist nicht gegeben.

Dies trifft insbesondere auf Ketten kleiner Baugröße zu, die üblicherweise nur zur Übertragung relativ kleiner Druckkräfte verwendet werden können.

So ist in US 1,184,349 eine Kette beschrieben, die aus alternierend angeordneten Außen- und Innenlaschen gebildet wird, die mittels Bolzen miteinander verbunden sind. Hierbei wird eine Außenlasche verwendet, in die parallel zur Längsachse der Kette eine Nut eingearbeitet ist, in die die Innenlaschen eingesetzt und die Außen- und Innenlaschen mit durch Bohrungen geführten Bolzen miteinander verbunden sind.

Die Außenlaschen sind aus einem runden Vollmaterial herstellbar, in das die bereits erwähnte Nut eingearbeitet werden kann. Die Stirnseiten der Außenlaschen sind hier einseitig abgerundet ausgebildet und der übrige Teil der Außenlaschenstirnflächen kann in gestreckter Stellung in direkter Berührung mit der entgegengesetzt ausgerichteten Stirnfläche einer benachbarter Außenlasche in direkter Berührung stehen.

Eine solche bekannte Kette ist aber material- und kostenintensiv herstellbar, da die Nut in ein stabförmiges Halbzeug durch eine zerspanende Bearbeitung ausgebildet werden muß. Dieses Herstellungsverfahren sichert aber nicht die hohen Erfordernisse an eine hohe Passungsgenauigkeit, so daß sowohl zwischen den Innen- und Außenlaschen, wie auch zwischen benachbarten Außenlaschen oder den Bolzenverbindungen Spiele auftreten und zum Teil auch erforderlich sind, die dazu führen, daß insbesondere bei der Übertragung von Schubkräften mit einer solchen Kette keine ausreichende Steifigkeit erreicht werden kann und diese in solchen Fällen abknicken kann.

Bei der in US 4,521,993 beschriebenen Kette sind u-förmig gebogene Laschen und stabile Zwischenstücke mittels Bolzen verbunden. Dabei stützen sich aufeinanderzu gerichtete Stirnflächen der Laschen und Zwischenstücke bei einer Schubbewegung der Kette unmittelbar gegeneinander ab.

Eine der Erfindung nahe kommende Kette zur Übertragung von Schubkräften, siehe Oberbegriff des Anspruchs 1, ist in FR-A-2 345 626 beschrieben. Hier werden jeweils rechts und links jeweils alternierend angeordnete Laschenelemente, die über Bolzen miteinander verbunden werden, an einer solchen Kette eingesetzt. Die jeweils rechts und links alternierend angeordneten Laschenelemente weisen konturierte zur Abstützung dienende Stirnflächen, die jeweils aneinander liegen und Schubkräfte übertragen sollen, auf.

Es ist daher Aufgabe der Erfindung, eine Kette vorzuschlagen, mit der es möglich ist, Schubkräfte axial, teilweise ungeführt, bei Vermeidung eines Abknickens der Kette zu übertragen.

Erfindungsgemäß wird diese Aufgabe mit den Merkmalen des Anspruchs 1 gelöst. Vorteilhafte Ausgestaltungsformen und Weiterbildungen der Erfindung ergeben sich bei Nutzung der in den untergeordneten Ansprüchen enthaltenen Merkmale.

Die erfindungsgemäße Kette, die in Schubkettenantrieben verwendet werden kann, ist aus im wesentlichen drei verschiedenen Einzelteilen aufgebaut und greift dabei auch auf bekannte Elemente zurück.

So werden die einzelnen Kettenglieder mit Bolzen verbunden und die Drehantriebsbewegung eines entsprechend ausgebildeten Kettenrades kann über die Bolzen auf die Kette übertragen werden, so daß das Drehmoment, das am Kettenrad für den Antrieb zur Verfügung steht, auch als Kraft auf die Kette übertragen werden kann.

Für die Verwendung in zumindest teilweise ungeführten Schubkettenantrieben sind zwei verschiedene Kettenglieder erforderlich, die mittels der bereits genannten Bolzen miteinander verbunden werden. Die verschiedenen Kettenglieder werden dabei in bekannter Form alternierend angeordnet und miteinander verbunden.

Ein solches Kettenglied kann dabei als U-förmig gebogener Bügel ausgebildet sein und das jeweils andere Kettenglied als ebene Innenlasche verwendet werden.
4

In den Außen- und den Innenlaschen sind wieder Lochpaare vorhanden, durch die die Bolzen geführt und gehalten werden können. Auf die Bolzen können Hülsen und ggf. auch zusätzliche Rollen spielbehaftet aufgeschoben sein.

Die U-förmig gebogenen Bügel, die Außen- und Innenlaschen weisen beidseitig stirnseitige Stützflächen auf, die in gestreckter Stellung der Kette von jeweils nebeneinander angeordneten Bügeln bzw. Außenund Innenlaschen miteinander in Berührung stehen, wobei auch die stirnseitigen Stützflächen im Scheitelbereich des U-förmigen Bügels benutzt werden. Die beim Antrieb auftretenden Druckkräfte können sich so an diesen Stützflächen abstützen und die Kette wird durch geeignete Dimensionierung der U-förmigen Bügel bzw. der Außen- und Innenlaschen in gestreckter Stellung rückensteif, wobei insbesondere die Ausbildung der stirnseitigen Stützfläche zum Tragen kommt.

Bei der erfindungsgemäßen Kette werden Innen- und/oder Außenlaschen verwendet, die parallel zur Längsachse der Bolzen abgewinkelt sind. Außerdem ist ihre Länge jeweils so dimensioniert, daß ein Spiel, das zwischen den Bolzen und den Bohrungen in den Innenund Außenlaschen vorhanden ist oder für den Fall, daß auf den Bolzen zur Verringerung von Reibung und Verschleiß Hülsen spielbehaftet aufgeschoben sind, das Spiel zwischen diesen Hülsen und den Bolzen, in gestreckter Stellung der Kette kompensiert ist. D.h., daß in der gestreckten Stellung der Kette die stirnseitigen Stützflächen, bis auf einen abgerundeten Kantenbereich an der Seite, der normalerweise zu antreibenden Kettenrädern zeigt, nahezu vollflächig bei benachbarten Außen- und Innenlaschen anliegen, so daß eine Rückensteife, d.h., daß in Schubrichtung eine rückensteife Kette verfügbar ist, die auch bei größeren Schubkräften nicht abknickt.

Wird eine Kette, bei der jeweils eine Innen- und Außenlasche, mit entsprechend abgewinkelten Teilen verwendet, die jeweils alternierend aneinandergereiht sind, kann durch die abgewinkelten Teile der Innenund Außenlaschen in Verbindung mit der entsprechenden Längendimensionierung die hohe geforderte Rückensteifigkeit erreicht werden. In seitlicher Richtung ist eine solche Kette aber flexibler ausgebildet, so daß ein gewisses Maß an Abknicken erreicht werden kann. Dieses Abknicken kann für einige Anwendungsfälle auch günstig sein, wobei es sich hierbei z.B. um einen entsprechenden Antrieb zum Öffnen und Schließen eines Fensters handeln kann. Dabei kann der Kettenantrieb und die unmittelbare Führung der Kette am Antrieb starr ausgebildet sein und die Kette gleicht durch ihre Flexibilität bestimmte erforderliche Bewegungstoleranzen beim Öffnen und Schließen aus.

Die Kette kann aber auch aus zweigeteilten Innen- und/oder Außenlaschen zusammengebaut sein, wobei die beiden Teile einer solchen Innen- oder Außenlasche in bezug zur Längsachse der Kette symmetrisch ausgebildet sind und die parallel zur Längsachse der Bolzen gebogenen Teile aufeinander zu gerichtet sind, so daß im zusammengebauten Zustand einer Kette, ein U-förmig gebogener Bügel aus diesen beiden Teilen gebildet wird.

Eine solche Ausführungsform weist nicht nur die geforderte Rückensteifigkeit, sondern auch ein höheres Maß an Seitenstabilität auf, da die sich paarweise gegenüberliegenden Stirnflächen Stützflächen, der beiden Teile einer solchen Lasche, wieder an den benachbarten stirnseitigen Stützflächen einer anderen Lasche anliegen und so eine Kompensation von Seitenkräften erreicht werden kann.

Außerdem ist es günstig, wenn die Bügel bzw. die Innen- und Außenlaschen im unteren Kantenbereich abgerundet sind, um die Bewegungsmöglichkeit während der Drehung des Kettenantriebsrades und gegebenenfalls für ein Aufrollen einer solchen Kette zu sichern.

Gemäß der Erfindung ist der Radius oder die Formkurve der abgerundeten Kantenbereiche so ausgebildet, daß jeweils benachbarte Kantenbereiche benachbarter u-förmiger Bügel in abgewinkelter Stellung der Kette in direkter Berührung miteinander stehen, so daß eine weitere Stützmöglichkeit, die insbesondere ein seitliches Abknicken verhindert, erreicht wird. Dabei sollen Radius bzw. Formkurve sichern, daß z.B. bei der Drehantriebsbewegung eine Abrollbewegung solcher benachbarter abgerundeter Kantenbereiche erreicht werden kann. Diese Abstützung gleicht zusätzlich Fertigungstoleranzen der einzelnen Kettenelemente aus, wobei dies besonders ausgenutzt wird, wenn die Ketten in die gestreckte Stellung aus der aufgerollten bzw. abgeknickten Stellung (Abrollbewegung) durch die Antriebsbewegung in die Hubbewegung übergeht.

Mit nasenförmigen Stegen Kann eine Seitenführung erreicht werden, die einem seitlichen Abknicken entgegenwirkt. Bei der erfindungsgemäßen Kette können die Bolzen so angebracht und dimensioniert sein, daß sie zumindest einseitig die Kettenbreite überragen und der überstehende Teil der Bolzen in eine Führung eingreifen kann. Dabei sollte eine solche Führung, insbesondere und dort zumindest in einem Teil vorhanden sein, in dem die Kette mit einem Kettenrad angetrieben wird. In diesem Bereich wir die Kette infolge der Drehbewegung geknickt und es kann dazu kommen, daß Kette und Kettenrad außer Eingriff geraten, so daß keine Kräfte bzw. Momente übertragen werden können. Greifen jedoch die überstehenden Teile der Bolzen in eine seitliche Führung ein, deren Radius mit dem Radius der Drehbewegung, der die Kette am Kettenrad folgt übereinstimmt, kann dem sinnvoll und auf einfache Weise entgegengewirkt werden, wobei die dabei zwangsläufig auftretenden Reibverluste, wegen der sehr kleinen Berührungsflächen entsprechend klein gehalten werden können.

Dabei kann die erfindungsgemäße Kette vorteilhaft auch so ausgebildet sein, daß die Bolzen mit den Kettengliedern so verbunden werden, daß sie alternierend an beiden Seiten der Kette überstehen und in jeweils eine beidseitig des Kettenrades angeordnete teilkreisförmige Führung während der Drehbewegung eingreifen können.

Die erfindungsgemäße Kette kann außerdem weiter gebildet werden, indem die Bügel bzw. die Außen- und Innenlaschen durch beispielsweise Laserschneiden bzw. Stanzen und Biegen so hergestellt werden, daß in den seitlichen Biegebereichen der Bügel an deren Stirnseiten sich paarweise gegenüberliegende Aussparungen ausgebildet oder am gebogenen Teil von Außenlaschen eine Aussparung sind/ist, in die nasenförmige Stege der Innenlaschen im zusammengebauten Zustand eingreifen können. Dabei sollten die Aussparungen und die nasenförmigen Stege so dimensioniert sein, daß die beiden Seitenflächen der Stege mit den Stirnseiten der Aussparungen, die parallel zu den Stützflächen ausgerichtet sind, in gestreckter Stellung der Kette in direkter Berührung miteinander stehen, so daß auch über diese Flächen Stützkräfte durch Formschluß übertragen werden können.

Die Innenlaschen können weiter verbessert werden, wenn an ihnen Ansätze ausgebildet sind, die in den schmaleren nasenförmigen Steg nachfolgend auslaufen. Diese Ansätze sind parallel zur Längsrichtung der gestreckten Kette ausgerichtet und liegen in gestreckter Stellung der Kette an der inneren Scheitelfläche der Bügel an, so daß auch Querkräfte aufgenommen werden können und ein Abknicken weiter vermieden werden kann.

Die Bügel können neben ebenen Scheitelbereichen, die einfacher hergestellt werden können, auch erhaben gebogen ausgebildet werden und so eine günstigere Anpassung an den Durchmesser, der bei der Antriebsbewegung während des Drehens des Kettenrades erforderlich ist, möglich wird. Eine so gebogene Scheitelfläche kann dann gegebenenfalls auch für eine eigene bzw. zusätzliche Führung benutzt werden, wobei hierfür bevorzugt eine geringe, z.B. sehr schmale Führungsfläche zur Verringerung der Reibverluste verwendet werden soll. Für eine solche Führung können aber auch entsprechend angeordnete sich drehende Elemente, die in nahezu punktförmiger Berührung mit den gebogenen Scheitelflächen der Bügel stehen, Verwendung finden. Solche Elemente können z.B. kleine fluchtend hintereinander angeordnete Rädchen sein.

Ganz besonders vorteilhaft kann eine solche erfindungsgemäße Kette in einem Schubantrieb verwendet werden, mit dem Luken, Türen oder Fenster von Gebäuden geöffnet und geschlossen werden sollen. Ein solcher Schubantrieb verwendet neben der erfindungsgemäßen Kette, dem bereits genannten Kettenrad auch einen elektromotorischen bzw. anderen geeigneten Antrieb, bei Bedarf ein Getriebe (z.B. ein Räderumlaufgetriebe) und besonders günstig ist ein solcher Antrieb so ausgebildet, daß die nicht ausgefahrene Kette direkt im Inneren des Schubantriebsgehäuses aufgenommen werden kann. Hierfür können im Gehäuse entsprechende Räume mit Führungen vorhanden sein, in die die überstehenden Bolzenteile eingreifen und es so möglich wird, die Kette platzsparend zumindest teilweise aufgerollt bzw. abgeknickt aufzunehmen.

Mit einer solchen erfindungsgemäßen Kette können Schubkräfte oberhalb 500 N über eine längere Wegstrecke ungeführt übertragen werden, ohne daß es zum Abknicken der Kette kommt und es ist demzufolge möglich, mit der Erfindung auch relativ schwere Teile, wie z.B. geneigt angebrachte Dachfenster, zu öffnen und in geöffneter Stellung zu halten. Mit der Erfindung können also solche Verschließeinrichtungen von Gebäuden vollautomatisch betätigt werden.

Die erfindungsgemäße Kette kann aber auch im Zusammenwirken mit axial wirkenden Antriebselementen, wie z.B. Hydraulikzylindern, Getrieben oder Gasdruckfedern eingesetzt werden. Dadurch können die mit solchen Antrieben aufgebrachten rein axialen Kräfte ebenfalls zumindest teilweise ungeführt in andere Richtungen umgelenkt werden, die sich auch stark vom 180° Winkel der gestreckten Kette unterscheiden können.

So kann z.B. eine erfindungsgemäße Kette mit einer Gasdruckfeder und ggf. anderen Antriebselementen für eine Notbetätigung von z.B. Entlüftungen bei Gefahrensituationen eingesetzt werden.

Dabei ist es vorteilhaft, daß z.B. die Gasdruckfeder günstig angeordnet werden kann und der zur Verfügung stehende Raum für den Einbau besser nutzbar ist, da die Gasdruckfeder auch orthogonal zur eigentlichen Öffnungsrichtung, in der die Kette wirkt, angeordnet werden kann.

Mit der erfindungsgemäßen Kette können Druckkräfte sogar in die entgegengesetzte Richtung solcher axial wirkenden Antriebe ohne weiteres umgelenkt werden.

Nachfolgend soll die Erfindung an Ausführungsbeispielen näher beschrieben werden.

Dabei zeigen:
- Figuren 1 bis 3: einen u-förmig gebogenen Bügel in drei Ansichten, wie er als Kettenglied einer erfindungsgemäßen Kette verwendet werden kann;
- Figur 8: ein weiteres Beispiel einer Kette, mit drei dargestellten Einzellaschen, in einer Seitenansicht;
- Figur 9: eine Vorderansicht einer Kette nach Figur 8;
- Figur 10: vier Ansichten einer Außenlasche für eine Kette nach Figuren 8 und 9;
- Figur 11: vier Ansichten einer Innenlasche einer Kette nach Figuren 8 und 9;
- Figur 12: drei Ansichten eines weiteren Beispiels einer erfindungsgemäßen Kette;
- Figur 13: vier Ansichten einer Innenlasche für eine Kette nach Figur 12 und
- Figur 14: drei Ansichten einer Außenlasche für eine Kette nach Figur 12.

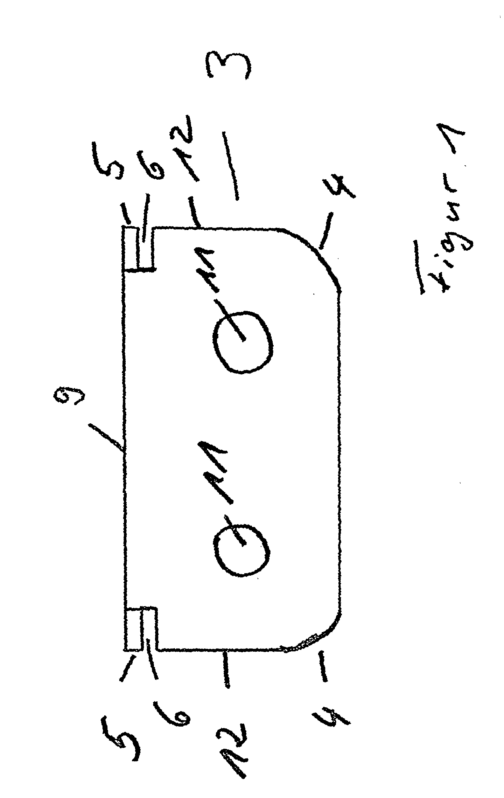

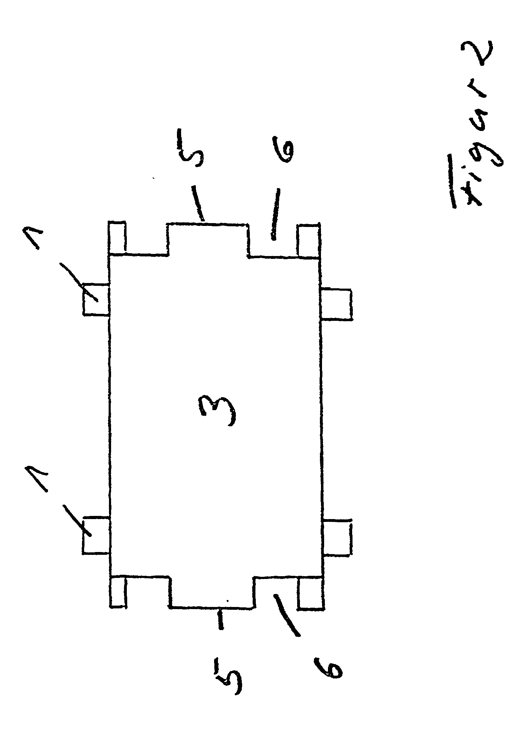

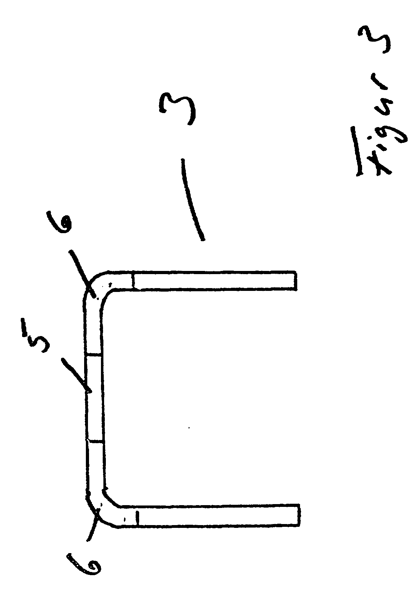

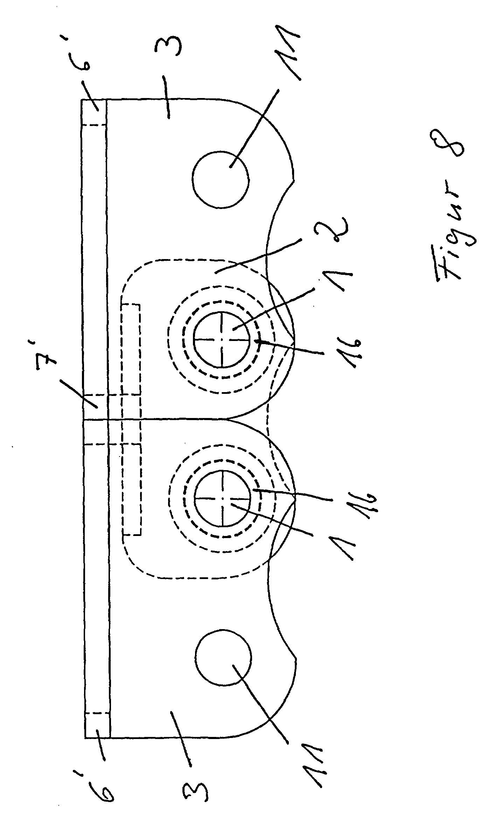

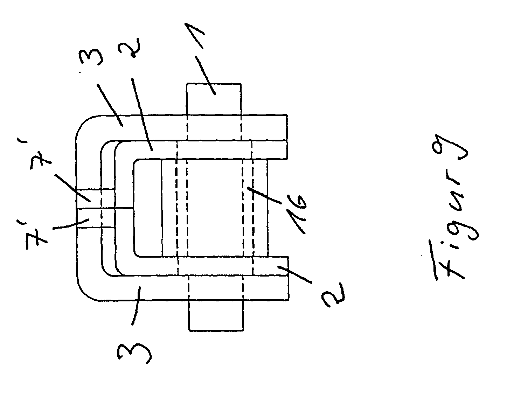

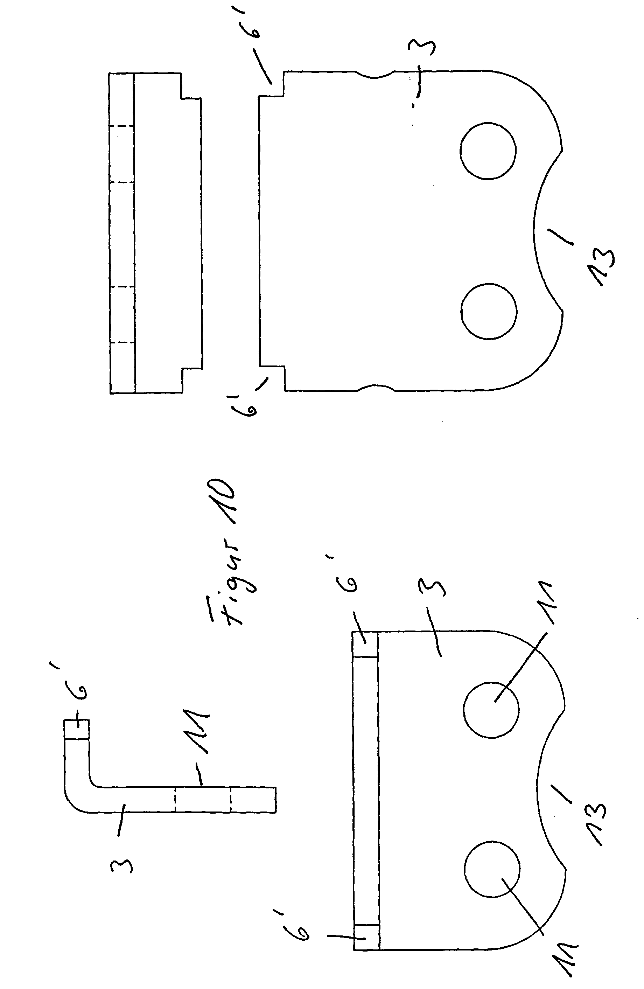

Die Figuren 1 bis 3 zeigen ein Beispiel für einen Bügel, der durch Stanzen und Biegen aus einer flächigen Metallplatte hergestellt werden kann und eines der beiden verschiedenen Kettenglieder für eine erfindungsgemäße Kette darstellt.

Im einfachsten Fall ist ein solcher Bügel 3 aus einem Stück gefertigt und er weist Bohrungen 11 für die Durchführung der Bolzen 1 auf.

Außerdem sind im Kantenbereich 4 Abrundungen, die das Abknicken der Kette während der Drehbewegung um das nicht dargestellte Kettenrad zu ermöglichen, vorhanden.

Neben den Stützflächen 5 an den beiden Stirnseiten des Scheitelbereiches 9 stehen die seitlichen Stützflächen 12 an den Schenkeln des Bügels 3 zur Aufnahme der Druckkräfte beim Übertragen der Schubbewegung zur Verfügung.

Das in den Figuren 1 bis 3 dargestellte Beispiel eines erfindungsgemäß zu verwendenden Bügels 3 ist weiter verbessert, indem an beiden Seiten und an beiden Stirnseiten Aussparungen 6 ausgebildet sind. Die Aussparungen 6 schließen jeweils eine Stützfläche 5 ein und sind so dimensioniert, daß ein nasenförmiger Steg, der an den Innenlaschen der zweiten Form der Kettenglieder ausgebildet ist, in die sich gegenüberliegenden Aussparungen 6 zweier benachbarter Bügel eingreifen kann und die Stirnflächen der Aussparungen 6 und die Seitenflächen der nasenförmigen Stege in gestreckter Stellung der Kette in direkter Berührung miteinander stehen und demzufolge auch diese Flächen zur Aufnahme von Stützkräften ausgenutzt werden können.

Die Bügel 3 werden über die Bolzen 1 und paarweise von Innenlaschen miteinander verbunden und so eine Kette durch Aneinanderreihung beliebiger Länge gebildet.

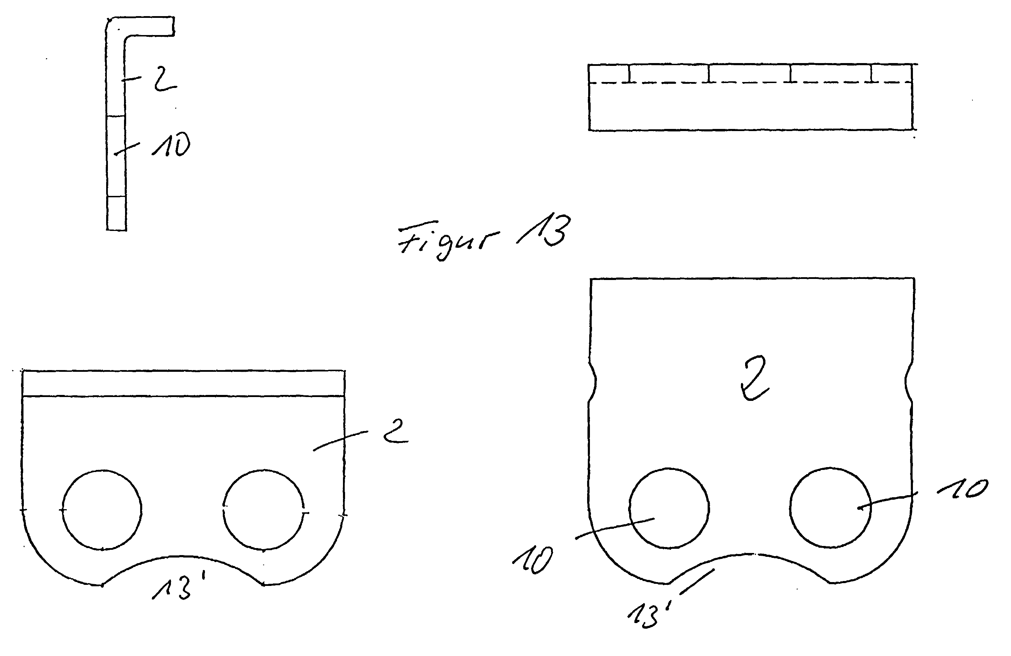

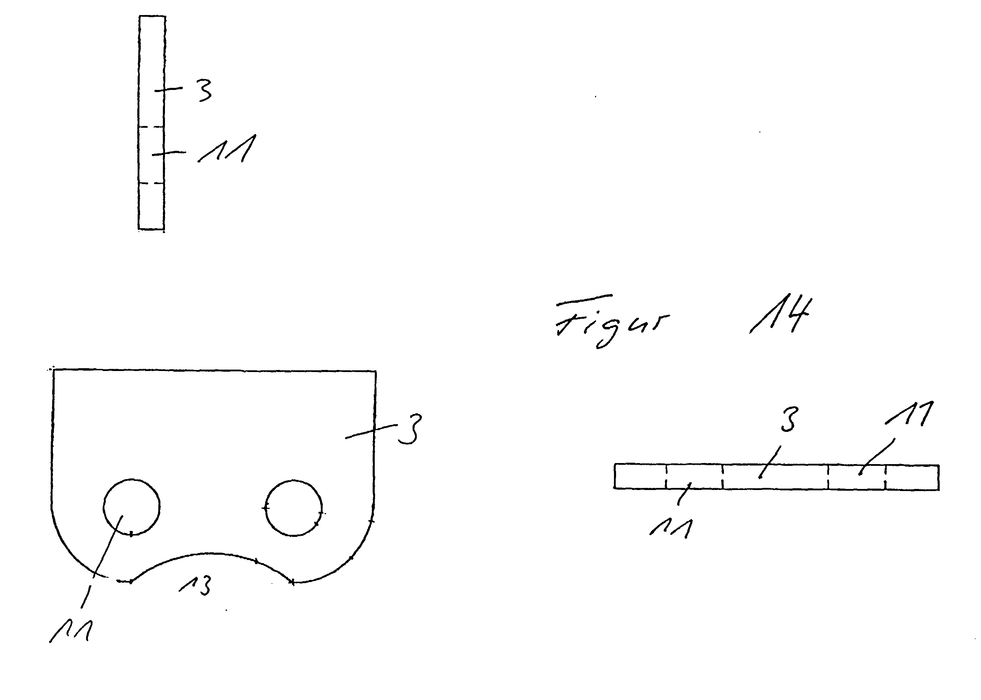

Bei dem in der Figur 8 gezeigten Beispiel einer erfindungsgemäßen Kette, sind zwei benachbarte Außenlaschen 3, die über Bolzen 1 mit einer zwischen ihnen liegenden Innenlasche 2 verbunden sind, erkennbar. Auch hier wird deutlich, wie der nasenförmige Steg 7' in benachbarte Aussparungen 6' von Außenlaschen 3 formschlüssig, in gestreckter Stellung der Kette eingreift.

Außerdem werden bei diesem Beispiel Hülsen 16 verwendet, die bei der Montage auf die Bolzen 1, zur Verbindung der verschiedenen Laschen, aufgeschoben werden, wobei zwischen Bolzen 1 und Hülsen ein bestimmtes Spiel eingehalten werden muß, um eine entsprechende Bewegung, beim Abknicken einer solchen Kette, ohne weiteres zu ermöglichen.

Wie bereits im allgemeinen Teil der Beschreibung erwähnt, wird dieses Spiel durch die Dimensionierung und hier insbesondere die Länge der Innenlaschen 2 und der Außenlaschen 3 entsprechend kompensiert, so daß die Schubkräfte in gestreckter Stellung, ausschließlich über die stirnseitigen Stützflächen von benachbarten Außenlaschen 3 und auch von benachbarten Innenlaschen 2 übertragen werden.

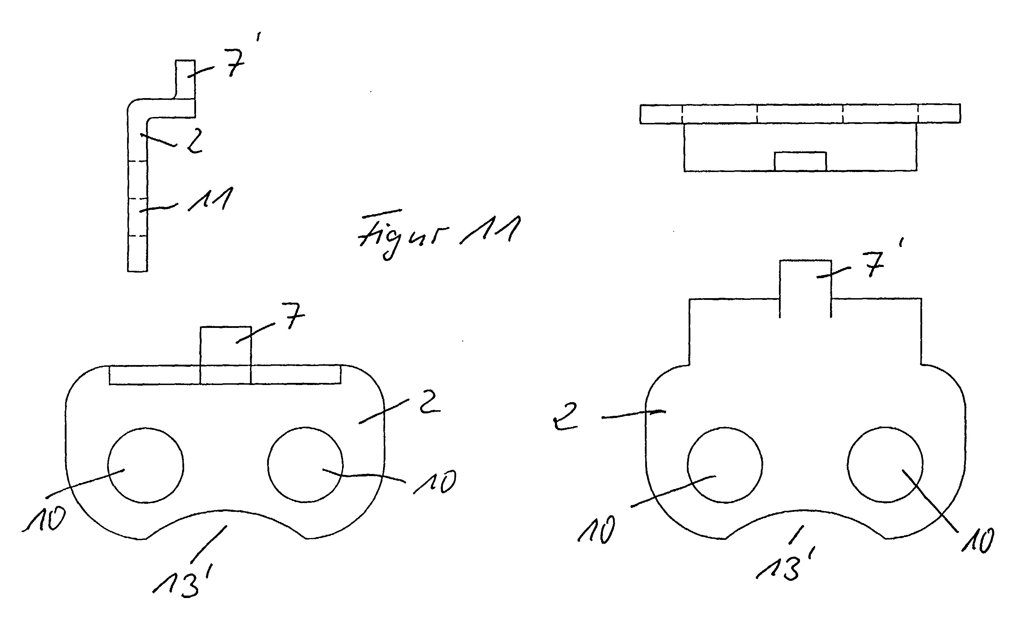

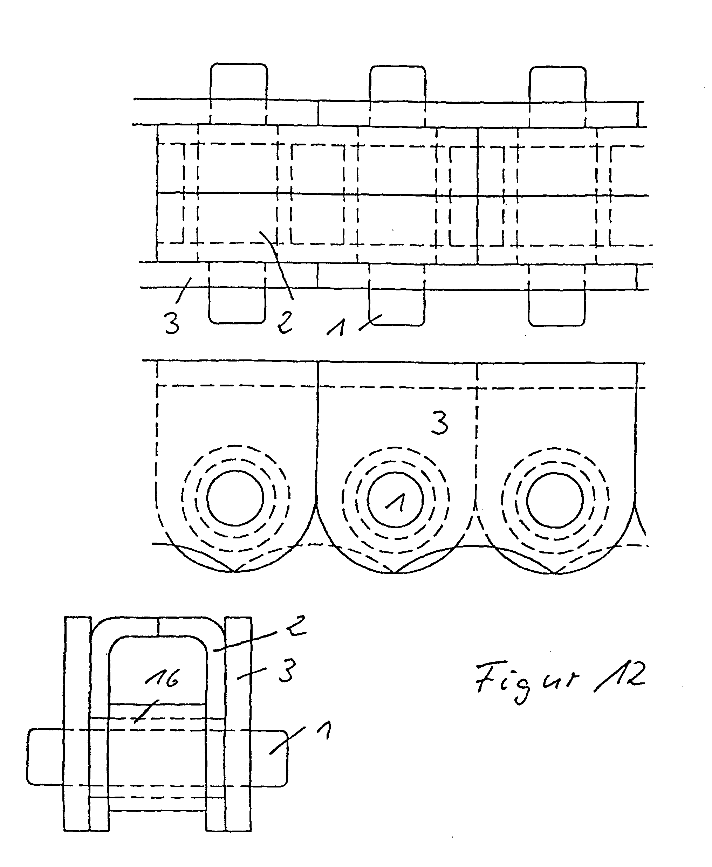

In der Figur 9 ist eine Vorderansicht eines Beispiels einer erfindungsgemäßen Kette dargestellt, bei dem sowohl die Innenlaschen 2, wie auch die Außenlaschen 3 aus jeweils zwei einzelnen Teilen bestehen, wobei im zusammengebauten Zustand beide bügelförmige Elemente bilden. Da die jeweiligen Teile der Innenlaschen 2 und der Außenlaschen 3 symmetrisch ausgebildet sind, liegen im oberen Bereich der Kette ihre Stirnflächen, in der Längsachse der Kette, aneinander. Die jeweiligen Teile der Innenlaschen 2 und der Außenlaschen 3 entsprechen dabei in ihrer Form der, wie sie auch beim Beispiel nach Figur 5 verwendet worden sind.

Bei dem hier gezeigten Beispiel wird wieder eine Hülse 16 zwischen den Teilen der Innenlasche 2 angeordnet und ist auf den Bolzen 1 aufgeschoben. Die Hülse 16 hat hier zusätzlich die Funktion eines Abstandshalters für die Teile der Innenlasche 2 und demzufolge auch für die Teile der Außenlasche 3.

In der Figur 10 ist ein Teil der Außenlasche 3 in vier verschiedenen Ansichten dargestellt.

Gleiches trifft auf die Figur 11, für die Teile, die die Innenlasche 2 bilden, zu.

Solche Innenlaschen 2 und Außenlaschen 3, wie sie allein für eine Kette nach einem Beispiel gemäß Figur 5 und den nachfolgend beschriebenen Ketten, bei denen auch Innenlasche 2 und Außenlasche 3 aus zwei solcher Teile gebildet wird, haben den Vorteil, daß sie kostengünstiger und mit höherer Präzision gefertigt werden können, als dies mit einteiligen Innen- bzw. Außenlaschen möglich ist. So können die Innen- und Außenlaschen 2 und 3 aus einem entsprechenden Blech, mit der erforderlichen Dicke und einem Material ausreichender Festigkeit gestanzt oder mit höherer Genauigkeit jedoch durch ein Laserschneidverfahren ausgeschnitten werden. Im Anschluß daran kann dann der abgebogene Teil einer solchen Lasche in einer Abkantvorrichtung orthogonal zur Längsachse des Bolzens 1 abgewinkelt werden, so daß eine solche Lasche oder ein Teil einer solchen Lasche in maximal zwei Arbeitsgängen zur Verfügung gestellt werden kann.

In der Figur 12 ist ein weiteres Beispiel einer erfindungsgemäßen Kette in drei Ansichten dargestellt.

Die Figuren 13 und 14 zeigen in jeweils drei verschiedenen Ansichten, die hier verwendeten Teile für die Innenlasche 2 und die Außenlasche 3, die wiederum mit überstehenden Bolzen 1, in alternierender Folge miteinander verbunden sind, wobei ebenfalls auf den Bolzen 1 Hülsen 16 aufgeschoben sein können.

Wie besonders deutlich in der Vorderansicht der Figur 12 erkennbar, bestehen die Außenlaschen 3 aus flachen Elementen, wie dies auch aus Figur 14 deutlich wird. In den Außenlaschen 3 sind lediglich die Bohrungen 11 für die Durchführung der Bolzen 1 und der bogenförmig eingezogene Bereich 13 ausgebildet, so daß sie besonders einfach und kostengünstig hergestellt werden können.

Zwischen ihnen ist eine aus zwei Teilen gebildete Innenlasche 2 vorhanden, deren oberer Teil wiederum orthogonal zur Längsachse der Bolzen 1 abgewinkelt ist.

Bei den beiden Teilen der Innenlasche 2, ist bei diesem Beispiel auf die Verwendung von nasenförmigen Stegen 7 bzw. 7' verzichtet worden und die Rückenund Seitensteifigkeit wird ausschließlich über die stirnseitigen Stützflächen der Innen- und Außenlaschenteile, die mit hoher Präzision und geringer Toleranz gefertigt sind, realisiert. Dabei werden insbesondere die Länge der Innen- und Außenlaschenteile so dimensioniert, daß das Spiel zwischen den Bolzen 1 und der Hülse 16, in gestreckter Stellung der Kette, kompensiert ist.

## Patentansprüche

1. Kette für einen Schubkettenantrieb, mit durch Bolzen (1) verbundenen Kettengliedern, die aus alternierend angeordneten Außen- und Innenlaschen (2, 3) gebildet ist, wobei die Außen- und Innenlaschen (2, 3) stirnseitige Stützflächen aufweisen, die in Richtung eines Kettenrades einseitig abgerundet sind, und der Radius oder die Formkurve abgerundeter Kantenbereiche (4) der Außen- und Innenlaschen (2, 3) so ausgebildet ist, daß die Kantenbereiche (4) benachbarter Teile der Innen- und/oder Außenlaschen (2, 3) in abgewinkelter Stellung, in ständiger direkter Berührung miteinander stehen,
**dadurch gekennzeichnet,**
**daß** die Innen- und/oder Außenlaschen (2, 3) parallel zur Längsachse der Bolzen (1) abgewinkelt sind, daß die Länge der Aüßen- und Innenlaschen (2, 3) so dimensioniert ist, daß jeweils die stirnseitigen Stützflächen von benachbarten Außen- und von benachbarten Innenlaschen (2, 3), beidseitig in gestreckter Stellung der Kette, bis auf den abgerundeten Kantenbereich, in direkter Berührung miteinander stehen, so daß ein Spiel, das zwischen Bolzen (1) und Bohrungen (10, 11) in den Innen- und Außenlaschen (2, 3) oder ein Spiel, das zwischen den Bolzen (1) und auf die Bolzen (1) aufgeschobenen Hülsen (16) vorhanden ist, in gestreckter Stellung der Kette kompensiert ist, und, daß in abgewinkelter Stellung der Kette, die als Stützfläche dienenden einseitig abgerundeten Kantenbereiche (4), in die die sich bei gestreckter Kette sich quer zur Längsrichtung der Kette erstreckenden Stützflächen knickfrei übergehen, so daß ein Spiel, das zwischen den Bolzen (1) oder auf die Bolzen (1) aufgeschobenen Hülsen (16) vorhanden ist, auch in abgewinkelten Stellungen der Ketten kompensiert ist.

2. Kette nach Anspruch 1,
**dadurch gekennzeichnet, daß** zumindest die Außenoder Innenlaschen (2, 3) entlang der Längsachse der Kette zweigeteilt sind und mit den beiden parallel zur Längsachse der Bolzen (1) gebogenen Teilen einer solchen Innen- oder Außenlasche (2, 3), im zusammengebauten Zustand der Kette, ein u-förmig gebogener Bügel gebildet ist.

3. Kette nach Anspruch 1 oder 2,
**dadurch gekennzeichnet, daß** in den stirnseitigen Stützflächen (5), im parallel zur Längsachse der Bolzen (1) gebogenen Teil von Außenlaschen Aussparungen (6, 6') ausgebildet sind, in die jeweils ein nasenförmiger orthogonal zur Längsachse der Kette und zur Längsachse der Bolzen (1) abgewinkelter Steg (7, 7') der Innenlasche (2), in gestreckter Stellung der Kette formschlüssig eingreift.

4. Kette nach Anspruch 3,
**dadurch gekennzeichnet, daß** die Aussparungen (6) paarweise an den Außenseiten eines u-förmigen Bügels ausgebildet sind.

5. Kette nach einem der Ansprüche 3 oder 4,
**dadurch gekennzeichnet, daß** die Aussparungen (6') an den benachbart aneinander liegenden Kanten der beiden Teile einer Außenlasche (3), die einen u-förmigen Bügel bilden, ausgebildet und an den Innenlaschen (2) in der Mitte der Innenlasche (2) zwischen Bohrungen (10) jeweils ein nasenförmiger Steg (7') parallel zum Teil der Innenlaschen (2), in dem die Bohrungen (10) ausgebildet sind, abgewinkelt ist, der in gestreckter Stellung der Kette in die Aussparungen (6') benachbarter Außenlaschen (3) formschlüssig eingreift.

6. Kette nach einem der Ansprüche 1 bis 5,
**dadurch gekennzeichnet, daß** die Außen- und die Innenlaschen (2, 3) jeweils zwischen den Bohrungen (10, 11) einen bogenförmig eingezogenen Bereich (13, 13') aufweisen.

7. Kette nach einem der Ansprüche 1 bis 6,
**dadurch gekennzeichnet, daß** die Bolzen (1) zumindest einseitig, für den Eingriff in mindestens eine Führung, einen seitlichen Überstand bilden.

8. Kette nach Anspruch 7,
**dadurch gekennzeichnet, daß** die Bolzen (1) alternierend an gegenüberliegenden Seiten der Kette überstehen.

9. Kette nach einem der Ansprüche 1 bis 8,
**dadurch gekennzeichnet, daß** an den Innenlaschen (2) Ansätze (8) ausgebildet sind, die in die schmaleren nasenförmigen Stege (7) auslaufen und an Bereichen der Ansätze (8) an der inneren Scheitelfläche der gebogenen Teile, der Außenlaschen in gestreckter Stellung der Kette anliegen.

10. Verwendung einer Kette nach einem der Ansprüche 1 bis 9 zur Umlenkung einer geradlinigen Antriebsbewegung in Druck- und/oder Zugrichtung eines axial wirkenden Antriebes.

11. Verwendung einer Kette nach einem der Ansprüche 1 bis 9 in einem Antrieb zum Öffnen und Schließen von Luken, Türen oder Fenstern von Gebäuden.

## Claims

1. Chain for a linear chain actuator, having chain links which are connected by pins and are formed from alternately arranged outer and inner link plates, the outer and inner link plates having end supporting surfaces which are rounded off on one side in the direction of a chain wheel, and the radius or the shaped curve of rounded-off edge regions (4) of the outer and inner link plates (2, 3) being designed in such a way that the edge regions (4) of adjacent parts of the inner and/or outer link plates (2, 3) are in constant direct contact with one another in the angled position, **characterized in that** the inner and/or outer link plates (2, 3) are angled parallel to the longitudinal axis of the pins (1), **in that** the length of the outer and inner link plates (2, 3) is dimensioned in such a way that in each case the end supporting surfaces of adjacent outer and inner link plates (2, 3), on both sides in the stretched position of the chain, are in direct contact with one another except for the rounded-off edge region, so that clearance which is present between pins (1) and holes (10, 11) in the inner and outer link plates (2, 3) or clearance which is present between the pins (1) and sleeves (16) pushed onto the pins (1) is compensated for in the stretched position of the chain, and **in that**, in the angled position of the chain, the edge regions (4) serving as supporting surface and rounded off on one side merge without kinks into the supporting surfaces extending transversely to the longitudinal direction of the chain when the chain is stretched, so that clearance which is present between the pins (1) or sleeves (16) pushed onto the pins (19) is also compensated for in angled positions of the chain.

2. Chain according to Claim 1, **characterized in that** at least the outer or inner link plates (2, 3) are split in two along the longitudinal axis of the chain, and, in the assembled state of the chain, a stirrup bent in a U shape is formed with the two parts, bent parallel to the longitudinal axis of the pins (1), of such an inner or outer link plate (2, 3).

3. Chain according to Claim 1 or 2, **characterized in that** recesses (6, 6') are formed in the end supporting surfaces (5) in the part of outer link plates which is bent parallel to the longitudinal axis of the pins (1), a respective nose-shaped web (7, 7'), angled orthogonally to the longitudinal axis of the chain and to the longitudinal axis of the pins (1), of the inner link plate (2) engaging in said recesses (6, 6') in a positive-locking manner in the stretched position of the chain.

4. Chain according to Claim 3, **characterized in that** the recesses (6) are formed in pairs on the outsides of a U-shaped stirrup.

5. Chain according to either of Claims 3 and 4, **characterized in that** the recesses (6') are formed on the adjacent edges of the two parts of an outer link plate (3) which form a U-shaped stirrup, and, on the inner link plates (2), in the centre of the inner link plate (2) between holes (10), in each case a nose-shaped web (7') is angled parallel to that part of the inner link plates (2) in which the holes (10) are formed, this web (7') engaging in a positive-locking manner in the recesses (6') of adjacent outer link plates (3) in the stretched position of the chain.

6. Chain according to one of Claims 1 to 5, **characterized in that** the outer and inner link plates (2, 3) in each case have a region (13, 13') indented in a curved shape between the holes (10, 11).

7. Chain according to one of Claims 1 to 6, **characterized in that** the pins (1) form a lateral projection, at least on one side, for engagement in at least one guide.

8. Chain according to Claim 7, **characterized in that** the pins (1) project alternately on opposite sides of the chain.

9. Chain according to one of Claims 1 to 8, **characterized in that** extensions (8) are formed on the inner link plates (2), which extensions (8) run out into the narrower nose-shaped webs (7) and, at regions of the extensions (8), bear against the inner apex surface of the curved parts of the outer link plates in the stretched position of the chain.

10. Use of a chain according to one of Claims 1 to 9 for deflecting a rectilinear drive movement in the push and/or pull direction of an axially acting drive.

11. Use of a chain according to one of Claims 1 to 9 in a drive for opening and closing hatches, doors or windows in buildings.

## Revendications

1. Chaîne pour un entraînement par chaîne de poussée, ayant des éléments de chaîne reliés par des boulons (1), qui est formée à partir de mailles extérieures et intérieures (2, 3) agencées en alternance, où les mailles extérieures et intérieures (2, 3) présentent des surfaces d'appui frontales, qui sont arrondies sur un côté dans la direction d'une roue à chaînes, et le rayon ou la courbure de forme de zones d'arête arrondies (4) des mailles extérieures et intérieures (2, 3) est réalisé de telle sorte que les zones d'arête (4) de parties adjacentes des mailles intérieures et/ou extérieures (2, 3), dans une position coudée, sont en contact direct permanent l'une avec l'autre, **caractérisée en ce que** les mailles intérieures et/ou extérieures (2, 3) sont coudées parallèlement à l'axe longitudinal des boulons (1), **en ce que** la longueur des mailles extérieures et intérieures (2, 3) a une telle dimension que les surfaces d'appui frontales de mailles extérieures adjacentes et de mailles intérieures adjacentes (2, 3), dans les deux cas dans la position étendue de la chaîne, sont en contact direct l'une avec l'autre jusqu'à la zone d'arête arrondie, de telle sorte qu'un jeu qui existe entre des boulons (1) et des alésages (10, 11) dans les mailles intérieures et extérieures (2, 3) ou un jeu qui existe entre les boulons (1) et des douilles (16) montées sur les boulons (1) est compensé dans la position étendue de la chaîne, et **en ce que**, dans la position coudée de la chaîne, les zones d'arête arrondies d'un côté (4) servant de surface d'appui se transforment sans brisure dans les surfaces d'appui s'étendant transversalement à la direction longitudinale de la chaîne dans la position étendue de la chaîne, de telle sorte qu'un jeu qui existe entre les boulons (1) ou des douilles (16) montées sur les boulons (1) est également compensé dans des positions coudées de la chaîne.

2. Chaîne selon la revendication 1, **caractérisée en ce qu'**au moins les mailles extérieures ou intérieures (2, 3) sont divisées en deux le long de l'axe longitudinal de la chaîne et **en ce que**, avec les deux parties courbées parallèlement à l'axe longitudinal des boulons (1) d'une telle maille intérieure ou extérieure (2, 3), dans la position assemblée de la chaîne, il est formé un arc courbé en forme de U.

3. Chaîne selon l'une quelconque des revendications 1 ou 2, **caractérisée en ce que**, dans les surfaces d'appui frontales (5), dans la partie courbée parallèlement à l'axe longitudinal des boulons (1) des mailles extérieures, des évidements (6, 6') sont pratiqués, dans lesquels s'engage respectivement à fermeture, dans la position étendue de la chaîne, une tige (7, 7') de la maille intérieure (2) en forme de nez perpendiculaire à l'axe longitudinal de la chaîne et à l'axe longitudinal des boulons (1).

4. Chaîne selon la revendication 3, **caractérisée en ce que** les évidements (6) sont réalisés par paires sur les côtés extérieurs d'un arc en forme de U.

5. Chaîne selon l'une quelconque des revendications 3 ou 4, **caractérisée en ce que** les évidements (6') sont réalisés sur les arêtes situées en position adjacente l'une de l'autre des deux parties d'une maille extérieure (3) qui forment un arc en forme de U et **en ce que**, sur les mailles intérieures (2) au centre de la maille intérieure (2) entre des alésages (10), respectivement, une tige en forme de nez (7') est coudée parallèlement à la partie des mailles intérieures (2) dans laquelle les alésages (10) sont pratiqués, laquelle s'engage à fermeture dans les évidements (6') de mailles extérieures (3) adjacentes dans la position étendue de la chaîne.

6. Chaîne selon l'une quelconque des revendications 1 à 5, **caractérisée en ce que** les mailles extérieures et intérieures (2, 3) présentent chacune entre les alésages (10, 11) une zone dégagée en forme d'arc (13, 13').

7. Chaîne selon l'une quelconque des revendications 1 à 6, **caractérisée en ce que** les boulons (1) forment une saillie latérale, au moins sur un côté, pour l'engagement dans au moins un guide.

8. Chaîne selon la revendication 7, **caractérisée en ce que** les boulons (1) font saillie en alternance sur des côtés opposés de la chaîne.

9. Chaîne selon l'une quelconque des revendications 1 à 8, **caractérisée en ce que** des rebords (8) sont réalisés sur les mailles intérieures (2), qui se transforment dans les tiges en forme de nez plus étroites (7), et **en ce que** les mailles extérieures prennent appui dans la position étendue de la chaîne dans la zone des rebords (8) sur la face de sommet intérieure des parties courbées.

10. Utilisation d'une chaîne selon l'une quelconque des revendications 1 à 9 pour la déviation d'un mouvement d'entraînement linéaire dans une direction de propulsion et/ou de traction d'un entraînement à fonctionnement axial.

11. Utilisation d'une chaîne selon l'une quelconque des revendications 1 à 9 dans un entraînement pour l'ouverture et la fermeture de hublots, de portes ou de fenêtres de bâtiments.
